# FASCICULE DE BREVET EUROPEEN

(11) **EP 0 658 707 B1**
(45) Date de publication et mention de la délivrance du brevet: **19.03.1997**
(21) Numéro de dépôt: 94402830.7
(22) Date de dépôt: 08.12.1994
(51) Int. Cl.: F16H 59/04

(54) **Dispositif perfectionné de commande d'une boîte de vitesses de véhicule automobile**
Vorrichtung zur Steuerung eines Kraftfahrzeuggetriebes
Device for controlling a gear box of a motor vehicle

(30) Priorité: 14.12.1993 FR 9315012
(43) Date de publication de la demande: 21.06.1995
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, F-95110 Sannois (FR)
(74) Mandataire: Polus, Camille

(56) Documents cités:
- EP-A- 0 272 167
- PATENT ABSTRACTS OF JAPAN vol. 12, no. 199 (P-714) (3046) 9 Juin 1988 & JP-A-63 003 323 (ISUZU MOTORS LTD.) 8 Janvier 1988

## Description

La présente invention concerne un dispositif perfectionné de commande d'une boîte de vitesses de véhicule automobile.

On connaît déjà dans l'état de la technique un dispositif de commande d'une boîte de vitesses de véhicule automobile, du type comportant un levier de changement de vitesses monté articulé dans l'habitacle du véhicule, muni d'un pommeau déplaçable selon une direction dite transversale de commande d'un organe mobile de sélection de rapports de la boîte de vitesses, et selon une direction sensiblement perpendiculaire à la précédente, dite longitudinale, de commande d'un organe mobile de passage de rapports de la boîte de vitesses, les déplacements de l'organe mobile de passage étant commandés par une tringlerie de transmission des déplacements longitudinaux du pommeau reliant le levier de changement de vitesses et l'organe mobile de passage.

Un dispositif de commande de ce type est décrit par exemple dans EP-A-0 272 167.

Le levier de changement de vitesses est articulé généralement sur le plancher du véhicule, entre les sièges avant de l'habitacle.

La combinaison des déplacements transversaux et longitudinaux du pommeau définit une grille de vitesses comprenant une ligne de sélection ou de point mort sensiblement transversale et plusieurs lignes de passage sensiblement longitudinales, au nombre de trois habituellement.

Or, les débattements du levier de changement de vitesses suivant la grille de vitesses se font dans un volume relativement important ce qui réduit l'espace disponible pour implanter des équipements entre les sièges avant de l'habitacle.

Le volume important nécessaire aux débattements du levier de changement de vitesses a également pour inconvénient de rendre difficile l'implantation de ce levier sous le volant.

Par ailleurs, le levier de changement de vitesses est relié aux organes mobiles de sélection et de passage par des tringleries de commande dont la cinématique est complexe et dont l'encombrement est inadapté à l'utilisation de plus en plus fréquente de pots catalytiques disposés à proximité des tringleries de commande.

De plus, la proximité des organes d'échappement pose des problèmes thermiques conduisant par exemple à la disparition de la graisse de lubrification des articulations des tringleries de commande.

A ces inconvénients s'ajoutent la nécessité de filtrer les vibrations du moteur transmises au levier de changement de vitesses par les tringleries de commande au moyen d'articulations élastiques susceptibles d'engendrer des défauts de précision de la commande de changement de vitesses.

JP-A-63 003 323 décrit un levier de changement de vitesses comportant un pommeau muni de contacts électriques pour la commande de sélection.

L'invention a pour but de remédier aux inconvénients exposés plus haut en proposant un dispositif de commande de boîte de vitesses dont le levier de changement de vitesses se déplace dans un volume de débattement relativement faible, ceci sans modifier notablement les habitudes du conducteur concernant l'utilisation de ce levier.

A cet effet l'invention a pour objet un dispositif de commande d'une boîte de vitesses de véhicule automobile, du type précité, caractérisé en ce que les déplacements de l'organe mobile de sélection, pour la sélection d'un rapport quelconque, sont commandés par des moyens actionneurs électriques dont l'alimentation en énergie est pilotée par des moyens actionnés par les déplacements transversaux du pommeau, en ce que les moyens de pilotage de l'alimentation en énergie des moyens actionneurs comprennent des moyens commutateurs électriques dont les différentes positions sont sélectionnées par le déplacement transversal du pommeau, en ce que le pommeau est déplaçable entre deux positions transversales extrêmes correspondant à deux positions extrêmes des moyens commutateurs dans lesquelles ils imposent respectivement des actions opposées des moyens actionneurs, et en ce que les moyens actionneurs comprennent deux actionneurs électriques munis chacun d'un organe mobile d'actionnement coopérant avec l'organe mobile de sélection, les organes mobiles d'actionnement étant déplaçables linéairement lorsque les actionneurs sont activés en agissant l'un et l'autre sur l'organe mobile de sélection suivant des sens opposés et étant rappelés élastiquement vers une position de repos de l'organe mobile de sélection lorsque les actionneurs sont au repos, les moyens commutateurs activant respectivement dans leurs positions extrêmes l'un ou l'autre des actionneurs.

Suivant des caractéristiques de différents modes de réalisation de l'invention :
- le levier de changement de vitesses est articulé autour d'un axe sensiblement transversal et le pommeau est articulé sur le levier autour d'un axe sensiblement longitudinal en étant rappelé élastiquement vers une position de repos, les moyens de pilotage de l'alimentation en énergie des moyens actionneurs étant agencés dans le pommeau ;
- le dispositif comporte de plus des moyens de sélection d'un rapport de marche arrière pilotés par un organe monté sur le levier de changement de vitesses et actionné par poussée ou traction coaxialement à ce levier;
- le levier de changement de vitesses est articulé sur une partie longitudinale médiane du plancher de l'habitacle formant une console surélevée par rapport au reste du plancher, la console comportant un réceptacle, accessible de l'habitacle, et un espace de débattement longitudinal d'une partie inférieure cachée du levier délimité par des parois longitudinales de la console et du réceptacle ;
- le levier de changement de vitesses est articulé sur un ensemble de colonne de direction, sous un volant de direction relié à cette colonne, de manière que les débattements du pommeau selon la direction longitudinale de passage des rapports soient sensiblement perpendiculaires à l'axe général de la colonne de direction.

Des exemples de réalisation de l'invention seront décrits ci-dessous en se référant aux dessins annexés dans lesquels :
- la figure 1 est une vue schématique en perspective d'un dispositif de commande d'une boîte de vitesses selon l'invention, avec une coupe transversale de la boîte de vitesses ;
- la figure 2 est une vue en coupe axiale du pommeau du levier de changement de vitesses représenté à la figure 1 ;
- la figure 3 est une vue en coupe suivant la ligne 3-3 de la figure 2 ;
- les figures 4 et 5 représentent respectivement deux exemples d'agencement sur le plancher de l'habitacle du levier de changement de vitesses de la figure 1, le plancher étant représenté en coupe transversale ;
- les figures 6 et 7 sont des vues en perspective de deux variantes de réalisation du pommeau du levier de changement de vitesses de la figure 1.

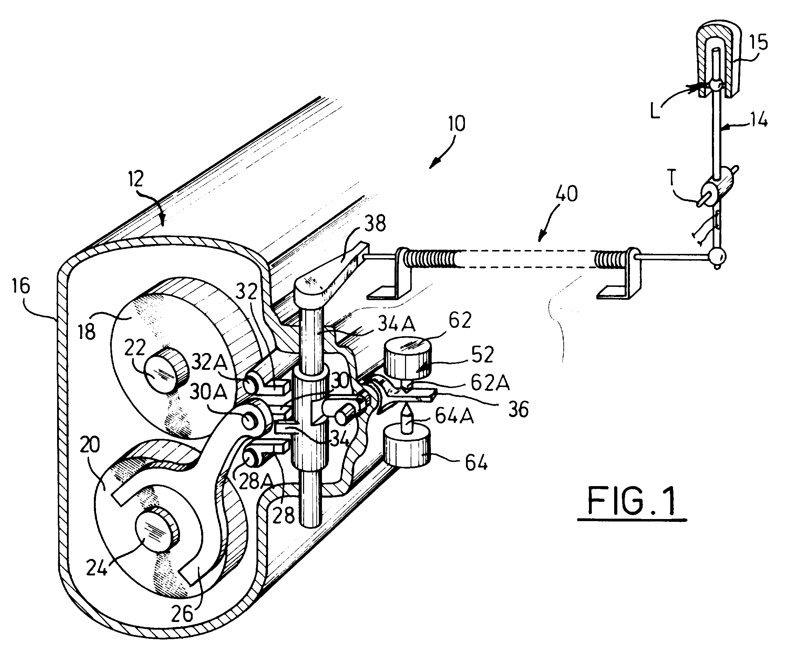

On a représenté sur la figure 1 un dispositif selon l'invention, désigné par la référence générale 10, pour la commande d'une boîte de vitesses classique 12 de véhicule automobile.

La boîte de vitesses 12 est commandée par un levier de changement de vitesses 14 muni d'un pommeau 15 et monté articulé dans l'habitacle du véhicule, par exemple sur le plancher de cet habitacle, entre les deux sièges avant.

De façon classique, la boîte de vitesses 12 comprend un carter 16 dans lequel sont agencés des trains d'engrenages 18,20 portés par deux arbres parallèles 22,24, les pignons des engrenages étant mis en prise par des synchroniseurs de type connu, non représentés sur les figures, actionnés par des fourchettes de passage de rapports 26, dont une seule est représentée sur la figure 1.

Chaque fourchette 26 est solidaire d'un doigt d'actionnement 28 à 32 formé sur un coulisseau mobile en translation sur un axe de passage de rapports 28A à 32A, parallèle aux arbres 22,24.

La boîte de vitesses selon l'exemple décrit comporte trois doigts d'actionnement 28 à 32 superposés correspondant chacun à une ligne de passage de rapports en considérant une grille de vitesses classique.

Une fourchette 34 de sélection de rapports, destinée à coopérer sélectivement avec un des doigts d'actionnement 28 à 32, est montée mobile en translation sur un axe 34A de sélection de rapports, perpendiculaire aux axes de passage de rapports 28A à 32A, et mobile en rotation solidairement avec cet axe de sélection 34A.

Les mouvements de translation et de rotation de la fourchette de sélection 34 sont commandés de façon connue en soi par des organes mobiles de sélection 36 et de passage 38 d'un rapport, formant des leviers, portés par le carter 16 en s'étendant à l'extérieur de celui-ci.

Selon le fonctionnement classique de la boîte de vitesses 12, l'actionnement du levier de sélection 36 a pour effet de positionner la fourchette de sélection 34 au droit d'un doigt d'actionnement 28 à 32 d'une fourchette de passage de rapports 26, et l'actionnement du levier de passage 38 a pour effet de déplacer en translation cette dernière fourchette de manière à mettre en prise les pignons du rapport de vitesses sélectionné.

Le dispositif de commande de la boîte de vitesses selon l'invention permet d'actionner les leviers de sélection 36 et de passage 38 en déplaçant le pommeau 15 du levier de changement de vitesses 14 selon des directions sensiblement perpendiculaires, c'est-à-dire selon une direction dite transversale d'actionnement du levier de sélection 36 et selon une direction dite longitudinale d'actionnement du levier de passage 38, ceci en évitant des débattements importants du pommeau 15 dans la direction transversale.

A cet effet, comme cela est représenté sur la figure 1, le levier de changement de vitesses 14 est articulé autour d'un axe T sensiblement transversal, l'extrémité du levier 16, opposée au pommeau 15, étant reliée de façon connue en soi au levier de passage 38 par une tringlerie 40 de transmission des déplacements longitudinaux (perpendiculaires à l'axe T) du pommeau 15.

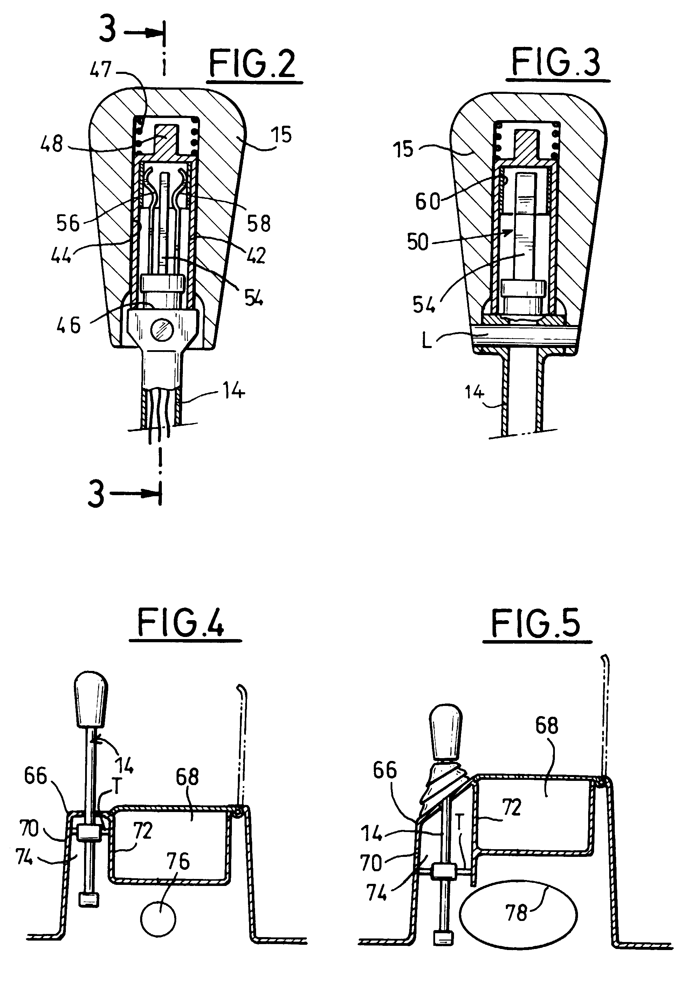

Par ailleurs, le pommeau 15 est articulé sur le levier 16 autour d'un axe L sensiblement longitudinal, comme cela est représenté plus en détail sur les figures 2 et 3.

Sur ces figures, on voit que le pommeau 15 comporte des moyens élastiques de rappel en position de repos comprenant, de préférence, un manchon 42, monté coulissant dans un trou borgne axial 44 du pommeau 15, dont une extrémité coopère avec une butée axiale 46 du levier 14 et dont l'autre extrémité coopère avec un ressort de poussée 47 agencé entre le fond du trou 44 et le manchon coulissant 42.

L'extrémité de ce manchon 42 en regard du fond du trou 44 est prolongée par une butée axiale 48 destinée à coopérer avec ce fond pour définir deux positions extrêmes opposées de déplacement transversal (perpendiculaire à l'axe L) du pommeau 15.

Les déplacements transversaux du pommeau 15 permettent de piloter, grâce à des moyens 50 de type connu agencés dans le pommeau, l'alimentation en énergie de moyens actionneurs 52, représentés à la figure 1, destinés à commander les déplacements du levier de sélection 36.

Les moyens de pilotage comprennent des moyens commutateurs électriques 50 dont les différentes positions sont sélectionnées par déplacement transversal du pommeau 15, de manière que les deux positions transversales extrêmes du pommeau 15 correspondent à deux positions extrêmes des moyens commutateurs 50, dans lesquelles ils imposent respectivement des actions opposées des moyens actionneurs 52.

Dans l'exemple représenté aux figures 2 et 3, les moyens commutateurs 50 comprennent des languettes 54 à 58 formant des contacts électriques, s'étendant à l'intérieur du manchon coulissant 42 en étant fixées sur l'extrémité du levier 14.

Une première languette rigide 54 est interposée entre les deux autres languettes souples 56,58, de manière qu'en déplaçant le pommeau 15 vers l'une ou l'autre de ces positions transversales extrêmes, l'une ou l'autre des languettes souples 56,58 fléchisse de façon à être mise en contact avec la languette rigide 54. Lorsque le pommeau 15 est dans sa position de repos, les languettes ne sont plus en contact entre elles.

De préférence, une bague isolante 60 est interposée entre les languettes souples 56,58 et le manchon coulissant 42.

En variante, les languettes de contact des moyens commutateurs 50 peuvent être remplacées par des moyens piézoélectriques.

Dans l'exemple représenté à la figure 1, les moyens actionneurs 52 sont alimentés électriquement et comprennent deux actionneurs électriques 62,64, de type connu, munis chacun d'un organe mobile d'actionnement 62A,64A coopérant avec le levier de sélection 36. Les organes mobiles d'actionnement 62A,64A sont déplaçables linéairement lorsque les actionneurs sont alimentés en agissant l'un et l'autre sur le levier de sélection 36 suivant des sens opposés. Lorsque les actionneurs 62,64 sont au repos, les organes mobiles d'actionnement 62A,64A sont rappelés élastiquement vers une position de repos du levier de sélection 36.

Les organes mobiles d'actionnement 62A,64A sont constitués par exemple par des noyaux plongeurs associés à des bobines électriques des actionneurs.

Les moyens d'alimentation des actionneurs 62,64 sont reliés aux moyens commutateurs 50 de façon connue en soi de manière qu'en mettant en contact la languette rigide 54 avec l'une ou l'autre des languettes souples 56,58 on active respectivement l'un ou l'autre des actionneurs 62,64.

En variante on peut utiliser d'autres types d'actionneurs électriques, par exemple rotatifs ou à double effet. On peut également utiliser des actionneurs fluidiques de type hydraulique ou pneumatique, notamment à dépression.

Le fonctionnement du dispositif de commande de boîte de vitesses représenté aux figures 1 à 3 est très simple.

On sélectionne un rapport de vitesses en faisant pivoter le pommeau 15 du levier de changement de vitesses autour de l'axe L de manière à le déplacer transversalement dans un sens ou dans le sens opposé selon le cas.

Le déplacement transversal du pommeau a pour effet de mettre en contact une des languettes souples 56,58 avec la languette rigide 54 de manière à activer l'un des actionneurs 62,64. Sous l'effet du déplacement de l'organe d'actionnement 62A,64A de l'actionneur activé, le levier de sélection 36 se déplace de manière à positionner la fourchette de sélection 34 au droit d'un doigt 28 à 32 de passage du rapport sélectionné.

La sélection d'un rapport se fait donc en déplaçant uniquement le pommeau 15 en direction transversale sans déplacer le levier de changement de vitesses 14, le pommeau 15, lorsqu'il est relâché, étant rappelé élastiquement vers la position de repos dans laquelle il est aligné avec le levier 14.

Après sélection d'un rapport, tout en maintenant le pommeau basculé transversalement, on passe le rapport en poussant ou tirant le pommeau 15 dans une direction longitudinale parallèle à son axe de pivotement L ce qui a pour effet de déplacer l'ensemble du levier 14 dans la même direction par pivotement autour de l'axe T.

Les déplacements longitudinaux du pommeau 15 sont transmis à une fourchette 26 de passage de rapports sélectionnée par l'intermédiaire du levier 38 et de la tringlerie 40, de manière à mettre en prise les pignons du rapport de vitesses choisi.

Le levier du changement de vitesses 14 est maintenu dans sa position de passage du rapport choisi par des moyens connus.

On notera donc qu'au cours de la sélection et du passage d'un rapport, les débattements du levier de changement de vitesses 14 se font uniquement parallèlement à un plan longitudinal perpendiculaire à l'axe T d'articulation du levier 14. Cependant, la combinaison du mouvement de pivotement du pommeau 15 autour de l'axe longitudinal L et du mouvement de pivotement du levier 14 autour de l'axe transversal T permet à un conducteur d'utiliser le levier de changement de vitesses du dispositif selon l'invention en faisant des gestes similaires à ceux nécessaires pour l'actionnement d'un levier de changement de vitesses classique.

Les faibles débattements transversaux du pommeau 15 permettent d'optimiser l'agencement des équipements sur la partie médiane du plancher sur laquelle est généralement monté le levier de changement de vitesses.

Sur les figures 4 et 5, on a représenté le levier de changement de vitesses 14 monté articulé sur une partie longitudinale médiane du plancher de l'habitacle formant une console 66 surélevée par rapport au reste du plancher, cette console comportant un réceptacle 68, accessible de l'habitacle.

L'axe T d'articulation du levier 14 est porté par des parois longitudinales 70,72 de la console 66 et du réceptacle 68 délimitant un espace 74 de débattement longitudinal de la partie inférieure cachée du levier 14, la dimension transversale de cet espace étant très inférieure à celle du réceptacle 68.

La console 66 peut avoir une hauteur relativement élevée permettant de loger à l'intérieur de celle-ci une tubulure d'échappement 76 (voir figure 4) ou un pot catalytique 78 (voir figure 5).

De plus, la console 66 peut être suffisamment haute pour former une surface d'appui pour un bras d'un occupant assis sur l'un des sièges avant de l'habitacle.

Les faibles débattements transversaux du pommeau 15 permettent également d'agencer celui-ci sous le volant de direction du véhicule. Dans ce cas, le levier 14 est articulé sur l'ensemble de colonne de direction relié au volant de manière que les débattements du pommeau 15 selon la direction longitudinale de passage des rapports soient sensiblement perpendiculaires à l'axe général de la colonne de direction.

Le dispositif 10 selon l'invention permet également de commander une boîte de vitesses à six rapports de marche avant et un rapport de marche arrière.

Dans ce cas, le dispositif 10 comporte des moyens de type connu de sélection d'un rapport de marche arrière, pilotés par un organe monté sur le levier de changement de vitesses 14 et actionné par poussée ou traction coaxialement au levier.

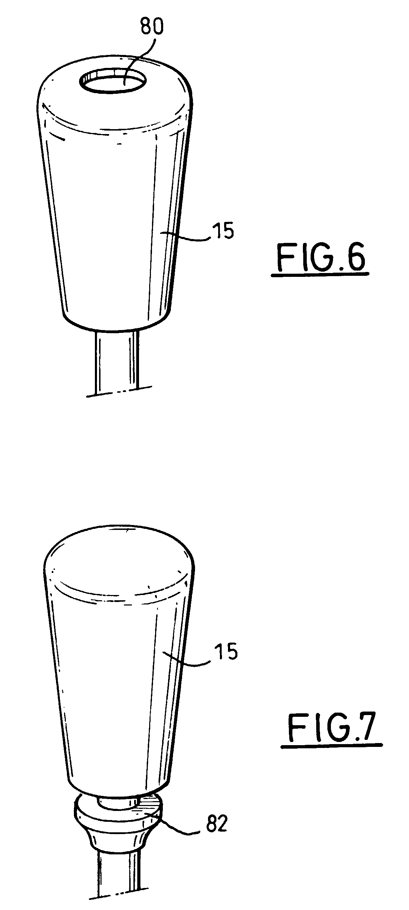

Sur la figure 6, on a représenté une variante de réalisation du pommeau 15 dans laquelle l'organe de pilotage du rapport de marche arrière est un poussoir 80 monté de façon connue en soi sur l'extrémité libre du pommeau 15.

Sur la figure 7, on a représenté une autre variante de réalisation du pommeau 15 dans laquelle l'organe de pilotage du rapport de marche arrière est une bague 82 montée de façon connue en soi sous le pommeau 15 autour du levier 14, de manière à être actionnée par traction vers le pommeau 15.

L'invention ne se limite pas aux exemples de réalisation décrits ci-dessus.

En particulier, le pommeau 15 peut être solidaire du levier 14, la partie supérieure de ce levier étant articulée sur sa partie inférieure autour d'un axe longitudinal L disposé entre le pommeau et l'axe transversal T d'articulation du levier, les moyens de rappel élastique en position de repos de la partie supérieure du levier et les moyens de pilotage de l'alimentation en énergie des moyens actionneurs étant agencés au niveau de l'axe longitudinal L.

Par ailleurs, des informations concernant les rapports sélectionnés ou le passage par le point mort, établies au moyen de capteurs de position des leviers de sélection et de passage, peuvent être affichées par des moyens connus sur le tableau de bord du véhicule.

Le dispositif de commande de boîte de vitesses selon l'invention peut s'appliquer à tous types de véhicules automobiles, en particulier des voitures de tourisme, des poids-lourds ou des engins pour travaux publics.

L'invention comporte de nombreux avantages.

En particulier, elle permet de réduire le volume de débattement du levier de changement de vitesses, ceci sans modifier notablement les habitudes du conducteur concernant l'utilisation de ce levier.

De plus, la tringlerie reliant le levier de changement de vitesses au levier de passage de rapports est simple ce qui facilite la filtration des vibrations provenant du moteur et de la boîte de vitesses.

## Revendications

1. Dispositif de commande d'une boîte de vitesses (12) de véhicule automobile, du type comportant un levier de changement de vitesses (14) monté articulé dans l'habitacle du véhicule, muni d'un pommeau (15) déplaçable selon une direction dite transversale de commande d'un organe mobile (36) de sélection de rapports de la boîte de vitesses, et selon une direction sensiblement perpendiculaire à la précédente, dite longitudinale, de commande d'un organe mobile (38) de passage de rapports de la boîte de vitesses, les déplacements de l'organe mobile de passage (38) étant commandés par une tringlerie (40) de transmission des déplacements longitudinaux du pommeau (15) reliant le levier de changement de vitesses (14) et l'organe mobile de passage (38), caractérisé en ce que les déplacements de l'organe mobile de sélection (36), pour la sélection d'un rapport quelconque, sont commandés par des moyens actionneurs électriques (52) dont l'alimentation en énergie est pilotée par des moyens (50) actionnés par les déplacements transversaux du pommeau (15), en ce que les moyens de pilotage de l'alimentation en énergie des moyens actionneurs (52) comprennent des moyens commutateurs électriques (50) dont les différentes positions sont sélectionnées par le déplacement transversal du pommeau (15), en ce que le pommeau (15) est déplaçable entre deux positions transversales extrêmes correspondant à deux positions extrêmes des moyens commutateurs (50) dans lesquelles ils imposent respectivement des actions opposées des moyens actionneurs (52), et en ce que les moyens actionneurs (52) comprennent deux actionneurs électriques (62,64) munis chacun d'un organe mobile d'actionnement (62A,62B) coopérant avec l'organe mobile de sélection (36), les organes mobiles d'actionnement (62A,64A) étant déplaçables linéairement lorsque les actionneurs (62,64) sont activés en agissant l'un et l'autre sur l'organe mobile de sélection (36) suivant des sens opposés et étant rappelés élastiquement vers une position de repos de l'organe mobile de sélection (36) lorsque les actionneurs sont au repos, les moyens commutateurs (50) activant respectivement dans leurs positions extrêmes l'un ou l'autre des actionneurs (62,64).

2. Dispositif selon la revendication 1, caractérisé en ce que le levier de changement de vitesses (14) est articulé autour d'un axe sensiblement transversal (T) et le pommeau (15) est articulé sur le levier (14) autour d'un axe sensiblement longitudinal (L) en étant rappelé élastiquement vers une position de repos, les moyens (50) de pilotage de l'alimentation en énergie des moyens actionneurs (52) étant agencés dans le pommeau (15).

3. Dispositif selon l'une quelconque des revendications précédentes, caractérisé en ce qu'il comporte de plus des moyens de sélection d'un rapport de marche arrière pilotés par un organe (80;82) monté sur le levier de changement de vitesses (14) et actionné par poussée ou traction coaxialement à ce levier (14).

4. Dispositif selon l'une quelconque des revendications précédentes, caractérisé en ce que le levier de changement de vitesses (14) est articulé sur une partie longitudinale médiane du plancher de l'habitacle formant une console (66) surélevée par rapport au reste du plancher, la console (66) comportant un réceptacle (68), accessible de l'habitacle, et un espace (74) de débattement longitudinal d'une partie inférieure cachée du levier (14) délimité par des parois longitudinales (70,72) de la console et du réceptacle.

5. Dispositif selon l'une quelconque des revendications précédentes, caractérisé en ce que le levier de changement de vitesses (14) est articulé sur un ensemble de colonne de direction, sous un volant de direction relié à cette colonne, de manière que les débattements du pommeau (15) selon la direction longitudinale de passage des rapports soient sensiblement perpendiculaires à l'axe général de la colonne de direction.

## Patentansprüche

1. Vorrichtung für die Steuerung eines Schaltgetriebes (12) eines Kraftfahrzeuges von der Art, welche einen Ganghebel (14) aufweist, der angelenkt im Fahrgastraum des Fahrzeuges montiert ist, und der mit einer Schalthebelmanschette (15) ausgerüstet ist, welche in einer sogenannten seitlich verlaufenden Richtung für die Betätigung eines mobilen Organs (36) für die Auswahl der Gänge des Schaltgetriebes, sowie in einer hierzu weitgehend senkrecht verlaufenden sogenannten Längsrichtung für die Betätigung eines mobilen Organs (38) für den Wechsel der Gänge des Schaltgetriebes bewegt werden kann, wobei die Bewegungen des mobilen Organs (38) für den Wechsel der Gänge mit Hilfe eines Antriebsgestänges (40) für die Übertragung der Längsbewegungen der Schalthebelmanschette (15) gesteuert werden, welche den Ganghebel (14) und das mobile Organ (38) für den Gangwechsel miteinander verbinden,
**dadurch gekennzeichnet, daß**
die Bewegungen des mobilen Organs (36) für die Auswahl eines bestimmten Ganges mit Hilfe von Elektromagneten (52) gesteuert werden, deren Energieversorgung mit Hilfe von Mitteln (50) gesteuert wird, welche durch die seitlichen Bewegungen der Schalthebelmanschette (15) betätigt werden, und dadurch, daß die Mittel für die Steuerung der Energieversorgung der Elektromagnete (52) elektrische Stellschalter (50) aufweisen, deren verschiedene Positionen durch die seitliche Bewegung der Schalthebelmanschette (15) ausgewählt werden, und dadurch, daß die Schalthebelmanschette (15) zwischen zwei seitlichen Endpositionen bewegt werden kann, welche zwei Endpositionen der Stellschalter (50) entsprechen, in denen sie jeweils entgegengesetzte Aktionen der Elektromagnete (52) beaufschlagen, und dadurch, daß die Elektromagnete (52) zwei elektrische Betätigungsmittel (62, 64) aufweisen, welche jeweils mit einem mobilen Betätigungsorgan (62A, 64A) ausgerüstet sind, das mit dem mobilen Wählorgan (36) zusammenwirkt, wobei diese mobilen Betätigungsorgane (62A, 64A) linear verschoben werden können, wenn die Elektromagnete (62, 64) aktiviert werden, und beide jeweils in entgegengesetzten Richtungen auf das mobile Wählorgan (36) einwirken und elastisch in eine Ruhestellung des mobilen Wählorgans (36) zurückgezogen werden, wenn sich diese Elektromagnete in der Ruhestellung befinden, wobei die Stellschalter (50) jeweils in ihren Endpositionen einen der Elektromagnete (62, 64) aktivieren.

2. Vorrichtung nach Anspruch 1,
**dadurch gekennzeichnet, daß**
der Ganghebel (14) um eine weitgehend seitlich verlaufende Achse (T) angeordnet ist und die Schalthebelmanschette (15) an dem Ganghebel (14) um eine weitgehend längsverlaufende Achse (L) angeordnet ist, wenn sie elastisch in eine Ruhestellung zurückgezogen wird, und dadurch, daß die Mittel (50) für die Steuerung der Energieversorgung der Elektromagnete (52) in der Schalthebelmanschette (15) eingebracht sind.

3. Vorrichtung nach einem der vorausgegangenen Ansprüche,
**dadurch gekennzeichnet, daß**
sie außerdem Mittel für die Auswahl eines Rückwärtsganges aufweist, welche von einem Organ (80; 82) gesteuert werden, die auf dem Ganghebel (14) montiert sind und durch Druck oder Zug koaxial zu diesem Ganghebel (14) betätigt werden können.

4. Vorrichtung nach einem der vorausgegangenen Ansprüche,
**dadurch gekennzeichnet, daß**
der Ganghebel (14) an einem mittleren Längsabschnitt des Bodens des Fahrgastraumes angelenkt ist, welcher eine Konsole (66) bildet, die gegenüber dem Rest des Bodens erhöht ist, wobei diese Konsole (66) eine von dem Fahrgastraum erreichbare Ablage (68) aufweist, sowie einen Freiraum (74) für die Ausfederung in Längsrichtung eines unteren verdeckten Abschnittes des Ganghebels (14) bildet, welcher von den Längswänden (70, 72) der Konsole und der Ablage eingegrenzt wird.

5. Vorrichtung nach einem der vorausgegangenen Ansprüche,
**dadurch gekennzeichnet, daß**
der Ganghebel (14) an einer Lenksäule angelenkt ist, welche unter einem mit dieser Lenksäule verbundenen Steuerrad so angeordnet ist, daß die Ausfederungen der Schalthebelmanschette (15) in Längsrichtung für das Wechseln der Gänge weitgehend senkrecht zur allgemeinen Achse der Lenksäule verlaufen.

## Claims

1. Apparatus for controlling a gearbox (12) of a motor vehicle, of the type comprising a gear change lever (14) articulatedly mounted in the cab of the vehicle, provided with a knob (15) which is movable in a direction, known as the transverse direction, to control a movable member (36) for selecting ratios in the gearbox, and in a direction substantially perpendicular to the previous one, referred to as the longitudinal direction, for controlling a movable member (38) for changing between the ratios of the gearbox, the movements of the movable change member (38) being controlled by a linkage (40) for transmitting the longitudinal movements of the knob (15) connecting the gear change lever (14) and the movable change member (38), characterised in that the movements of the movable selecting member (36), for selecting a ratio, are controlled by electric actuating means (52) the energy supply of which is controlled by means (50) actuated by transverse displacements of the knob (15), in that the means for controlling the energy supply to the actuating means (52) comprise electric switching means (50) the different posiions of which are selected by the transverse displacement of the knob (15), in that the knob (15) is movable between two extreme transverse positions corresponding to two extreme positions of the switching means (50) which impose, respectively, opposite actions of the actuating means (52), and in that the actuating means (52) comprise two electrical actuators (62, 64) each provided with a movable actuating member (62A, 62B) co-operating with the movable selecting member (36), the movable actuating means (62A, 64A) being displaceable in a linear manner when the actuators (62, 64) are activated so as to act on the movable selecting member (36) in opposite directions and being resiliently biased back towards a resting position of the movable selecting member (36) when the actuators are idle, the switching means (50) in their extreme positions respectively actuating one or other of the actuators (62, 64).

2. Apparatus according to claim 1, characterised in that the gear change lever (14) is articulated about a substantially transverse axis (T) and the knob (15) is articulated on the lever (14) about a substantially longitudinal axis (L), being resiliently biased back towards a resting position, the means (50) for controlling the energy supply to the actuating means (52) being arranged in the knob (15).

3. Apparatus according to one of the preceding claims, characterised in that it further comprises means for selecting a reverse gear ratio which are controlled by a member (80; 82) mounted on the gear change lever (14) and actuated by pushing or pulling coaxially with this lever (14).

4. Apparatus according to any one of the preceding claims, characterised in that the gear change lever (14) is articulated on a median longitudinal part of the floor of the cab, forming a console (66) which is raised relative to the rest of the floor, the console (66) comprising a container (68), accessible from the cab, and a space (74) for longitudinal movement of a hidden lower part of the lever (14) delimited by the longitudinal walls (70, 72) of the console and container.

5. Apparatus according to any one of the preceding claims, characterised in that the gear change lever (14) is articulated on a steering column assembly, underneath a steering wheel connected to this column, so that the movements of the knob (15), in the longitudinal direction of movement between ratios, are substantially perpendicular to the general axis of the steering column.
